# EUROPEAN PATENT SPECIFICATION

(11) **EP 4 002 865 B1**
(45) Date of publication and mention of the grant of the patent: **05.07.2023**
(21) Application number: 20862844.6
(22) Date of filing: 09.09.2020
(51) Int. Cl.: H04Q 11/00, H04L 41/0806

(54) **SERVICE CONFIGURATION METHOD AND APPARATUS**
VERFAHREN UND VORRICHTUNG ZUR DIENSTKONFIGURATION
PROCÉDÉ ET APPAREIL DE CONFIGURATION DE SERVICE

(30) Priority: 11.09.2019 CN 201910856728
(43) Date of publication of application: 25.05.2022
(73) Proprietor: ZTE Corporation, Shenzhen, Guangdong 518057 (CN)
(72) Inventor: ZHANG, Yangchun, Nanjing, Jiangsu 210012 (CN)
(74) Representative: Boult Wade Tennant LLP
(86) International application number: PCT/CN2020/114244
(87) International publication number: WO 2021/047546

(56) References cited:
- WO-A1-2018/020317
- CN-A- 101 355 387
- CN-A- 102 394 776
- CN-A- 107 317 647
- US-A1- 2009 080 889
- "Section 10+ 070524", ITU-T DRAFT ; STUDY PERIOD 2005-2008, INTERNATIONAL TELECOMMUNICATION UNION, GENEVA ; CH, vol. Study Group 15, 25 May 2007 (2007-05-25), pages 1-88, XP017528642, [retrieved on 2007-05-25]

## Description

### TECHNICAL FIELD

Embodiments of the present application relate to the field of communication technology, and in particular to a service configuration method and apparatus.

### BACKGROUND

A passive optical network (PON) system includes an optical network unit (ONU)/an optical network terminal (ONT) and an optical line terminal (OLT).

In a related art, service configuration has to be performed for each ONU/ONT before a PON system runs.

ITU-T DRAFT; STUDY PERIOD 2005-2008, INTERNATIONAL TELECOMMUNICATION UNION, GENEVA; CH, vol. Study Group 15,25 May 2007(2007-05-25), pages 1-88, XP017528642 relates to requirements of the management interface specification. The OMCI protocol is asymmetric: the controller in the OLT is the master, while the ONU is the slave. A single OLT controller using multiple instances of the protocol over separate control channels typically controls multiple ONUs.

WO2018020317A1 relates to a method of controlling data forwarding of an optical network unit (ONU) in a passive optical network (PON) system, wherein a management entity is created in the ONU, the management entity supporting management and maintenance for data forwarding rule; the ONU performs forwarding processing for uplink and downlink data according to the data forwarding rule. An OLT performs data forwarding rule management and configuration for the management entity in the ONU through a management protocol, for example in a GPON network environment, the OLT instructs the ONU to configure a corresponding management entity by expanding an optical network unit management control interface (OMCI) protocol message, generating and maintaining a forwarding rule table. Only the configured or authorized data streams can be permitted to enter the PON network or sent to the user-side device through the ONU, so that the PON network is safe, programmable, more flexible and quick in deploying new services, and meanwhile can better satisfy future application demands of the SDN.

### SUMMARY

The present application provides a service configuration method, comprising: transmitting, by an optical network unit, ONU, service configuration application information to an optical line terminal, OLT, according to pre-configured service information to apply for service configuration information, wherein the service configuration application information comprises all service configurations required by all OLT-ONUs for implementing pre-configured service bearing and forwarding; andperforming, by the ONU, service configuration according to the service configuration information. The invention is set out in the appended set of claims.

Some embodiments of the present application further provide an ONU including a first processing module and a second processing module. The first processing module is configured to apply for service configuration information from an OLT according to pre-configured service information. The second processing module is configured to perform service configuration according to the service configuration information.

Some embodiments of the present application further provide a service configuration apparatus including a memory, a processor and a computer program stored in the memory and capable of running in the processor. When executing the program, the processor implements the service configuration method as described in the above.

Some embodiments of the present application further provide a computer-readable storage medium storing a computer-executable instruction for implementing the service configuration method as described in the above.

Other features and advantages of the embodiments of the present application will be described in the following description, and partly become obvious based on the description, or understood by implementing the embodiments of the present application. The purpose and other advantages of the embodiments of the present application can be implemented and obtained through the structures specifically indicated in the specification, Claims and drawings.

### BRIEF DESCRIPTION OF THE DRAWINGS

The drawings provide further understanding on the technical solutions of the embodiments of the present application, form a portion of the present application, and are used with the embodiments to explain the technical solution of the present application, but do not limit the technical solution of the present application.
FIG. 1 is a flow chart of a service configuration method according to embodiments of the present application.
FIG. 2 is a schematic diagram of a service implementation according to the embodiments of the present application.
FIG. 3 is a flow chart of service configuration according to the embodiments of the present application.
FIG. 4 is a flow chart of another service configuration according to the embodiments of the present application.
FIG. 5 is a schematic diagram of another service implementation according to the embodiments of the present application.
FIG. 6 is a flow chart of another service configuration according to the embodiments of the present application.
FIG. 7 is a schematic diagram of a structure of an optical network unit according to the embodiments of the present application.

### DETAILED DESCRIPTION

In order to clarify the objective, the technical solutions and the advantages of the present application, the embodiments of the present application will be further described in details with reference to the accompanying drawings. It shall be noted that without conflict, the embodiments and the features in the embodiments in the present application may be randomly combined.

The operations shown in the flowcharts of the drawings may be performed in a computer system with a set of computer-executable instructions. In addition, although a logical sequence is shown in the flow charts, in some cases, the operations shown or described may be performed in a different sequence.

Inventors note that: service configurations vary based on such factors as varied ONU types, bearing services and users' network plans. As a result, a configuration method as such increases complicity of service activation by an operator, and decreases efficiency of activating services.

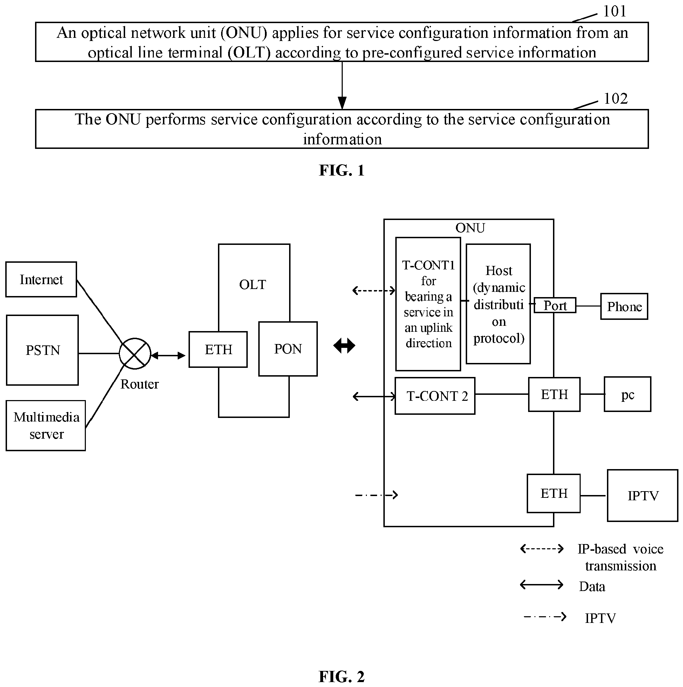

An embodiment of the present application provides a service configuration method, as shown in FIG. 1, including the following operations.

In operation 101, an optical network unit (ONU) applies for service configuration information from an optical line terminal (OLT) according to pre-configured service information.

In an example, the pre-configured service information is information corresponding to all functions required during following normal operations of the system.

In an example, after the ONU accesses to an OLT system, system access authentication including discovering, authentication and registration requires to be completed first. A gigabit-capable passive optical network (GPON) system follows ITU-T G.984.3, a GPON transmission convergence layer standard. A next generation passive optical network (NG-PON) system follows ITU-T G.987.3, a 10-GPON transmission convergence layer standard. An Ethernet passive optical network (EPON) system follows IEEE802.3, an Ethernet protocol. These will not be described in detail.

In 102, the ONU performs service configuration according to the service configuration information.

In an example, the ONU applies for service configuration information from the OLT according to the pre-configured service information, including the following operations.

Firstly, the ONU generates service configuration application information according to the pre-configured service information and using an information interaction protocol message defined by an extended field.

In an example, the information interaction protocol is a protocol of information interaction between the ONU and the OLT.

In an example, the ONU extracts information required to be configured through the OLT and to be notified to the OLT from the pre-configured service information; and constructs the service configuration application information to be transmitted to the OLT. Herein, the service configuration application information includes all service configurations required by all OLT-ONUs for implementing the pre-configured service bearing and forwarding. In an example, the service configuration application information includes a transmission container (T-CONT) for bearing a service by the GPON in the GPON system in an uplink direction, an allocation Identifier (Alloc-ID), a G-PON encapsulation mode port identifier (GEM port ID), quality of service (QoS) and Ethernet information like a virtual local area network (VLAN) and an Ethernet type; a logical link Identifier (LLID) in the EPON system, QoS and Ethernet information like a VLAN and an Ethernet type.

Secondly, the ONU transmits the service configuration application information to the OLT.

In an example, after the OLT receives the service configuration application information from the ONU, the following operations are performed.

The OLT configures VLAN information of a PON port of an OLT and VLAN information of an Ethernet port of a wide area network (WAN) according to the service configuration application information.

In an example, the ONU applies for service configuration information from the OLT according to the pre-configured service information, including the following operations.

Firstly, the ONU generates service configuration application information according to the pre-configured service information and based on a management entity (ME) defined by an existing standard framework extension.

In an example, a standard framework is a standard framework that a system where the ONU and the OLT are located follows.

Secondly, the ONU transmits the service configuration application information to the OLT.

In an example, when the ONU and the OLT are located in the GPON system, the information interaction protocol message is an ONU management and control interface (OMCI) message. The ONU generates service configuration application information according to the pre-configured service information and using the information interaction protocol message defined by the extended field, includes the following operations.

Firstly, the ONU determines a parameter corresponding to a resource to be configured by the OLT to the ONU or to be self-configured by the OLT, according to the pre-configured service information.

Secondly, the ONU establishes at least one OMCI instance including the acquired parameter.

Finally, the ONU uploads the acquired OMCI instance to the OMCI message, and sets a value of a most significant bit (MSB) among message-type fields in the OMCI message as a value indicating the OMCI message to be transmitted to the OLT is used to apply for the service configuration, and as the service configuration application information. Herein, the MSB among the message-type fields in the OMCI message is extended and pre-defined as a bit indicating whether the OMCI message transmitted to the OLT is used to apply for the service configuration.

In an example, the MSB of the message-type fields is a reserved bit that is temporarily unused. In order to implement service configuration application, the MSB may be filled as a field AP. It may be set that when the AP is set to 0, it indicates that the OMCI message follows a current ITU-T G.988 standard format. When the AP is set to 1, it indicates that the OMCI message is an OMCI message for applying for service configuration.

In an example, in response to that the ONU requires to perform service application, an Managed Entity (ME) of a current ITU-T G.988 standard is used, and AP is set as 1. Here, parameters that requires to be allocated by the OLT to the ONU being T-CONT and Alloc-ID is taken as an example. AP=1 indicates that the OMCI message is an OMCI message for applying for service configuration. After the OLT receives the message, it may be determined that an Alloc-ID requires to be allocated to the T-CONT with the ME ID of 0x8001 of the current ONU. Other parameters required to be managed based on what is reported by the ONU. Because Alloc-IDs are allocated by the OLT, the present application only indicates requiring an Alloc-ID rather than being limited to one ID. A processed OMCI is shown in Table 1.

**Table 1**

| Field | Byte | 8 | 7 | 6 | 5 | 4 | 3 | 2 | 1 | Comments |
|---|---|---|---|---|---|---|---|---|---|---|
| Transaction correlation identifier | 1-2 | | | | | | | | | |
| Message type | 3 | 1 | 0 | 1 | | | | | | AP= 1,AR = 0, AK = 1 bits 5-1: action = MIB upload next |
| Device identifier | 4 | 0 | 0 | 0 | 0 | 1 | 0 | 1 | 0 | OMCI = 0x0A |
| Managed entity identifier | 5-6 | | | | | | | | | Entity class = ONU data |
| | 7-8 | | | | | | | | | Entity instance = 0 |
| Message contents | 9-10 | | | | | | | | | 262(T-CONT) |
| | 11-12 | | | | | | | | | 0x8001 |
| | 13-14 | | | | | | | | | 0xE000 |
| | 15-16 | | | | | | | | | 0xFFFF |
| | 17 | | | | | | | | | 1 |
| | 18 | | | | | | | | | 1 (Strict priority) |
| | xx-40 | | | | | | | | | Zero padding |
| OMCI trailer | 41-48 | | | | | | | | | |

In an example, before the ONU performs the operations on each acquired instance, the following operations are included.

Firstly, the ONU receives a data acquisition request from the OLT.

Secondly, the ONU sets the value of the MSB among message-type fields in the OMCI message as the value indicating applying for service configuration of the OMCI message to be transmitted to the OLT.

Finally, the ONU transmits the processed OMCI message to the OLT to notify the OLT of there being subsequent application for the service configuration from the ONU.

In an example, the ONU generates service configuration application information according to the pre-configured service information and based on the ME defined by an existing standard framework extension, comprising the following operations.

Firstly, the ONU generates a management instance corresponding to the ME according to the pre-configured service information.

Secondly, the ONU takes the management instance as the service configuration application information.

In an example, when the ONU and the OLT are located in the GPON system, the ME includes an ME identifier and an ME attribute. The ME attribute includes: at least one piece of service configuration application information and an identifier corresponding to the at least one piece of service configuration application information.

In an example, when the least one piece of service configuration application information has excessive amount of information, the service configuration application information with the excessive amount of information may be divided for successive transmission. Herein, a divided service configuration application information includes at least one component for forming the service configuration application information. Herein, each component includes service configuration application information corresponding to the component, an identifier corresponding to the component and an identifier for indicating whether the component is a final component of the service configuration application information.

In an example, when the ONU and the OLT are located in the EPON system, the ME includes: a management attribute set with supplemented service configuration application attributes and information corresponding to the supplemented service configuration application attributes.

In an example, when characters of the information corresponding to the service configuration application attributes exceeds a maximum valid load of a single operation administration and maintenance protocol data unit (OAM PDU), the ONU transmits the service configuration application information to the OLT, including the following operations.

Firstly, the ONU divides the information corresponding to the service configuration application attributes in the ME into information segments each having characters not exceeding the maximum valid load of the single OAM PDU.

Secondly, the ONU transmits the acquired information segments to the OLT in sequence.

In the service configuration method provided in this embodiment, an ONU applies for service configuration information from an OLT according to pre-configured service information, and performs service configuration according to the service configuration information. Therefore, this service configuration method achieves automatic configuration of service. Complicity of service activation by an operator is decreased and service activation is more efficient.

Another embodiment of the present application further provides a service configuration method. In order for the ONU to report the service application information to the OLT, after the ONU is accessed to the OLT, a message uplinked to the OLT is marked as the service configuration application information by an existing OMCI standard message format-extension defined format. As shown in FIG. 2, it is assumed that services to be implemented are customized for a certain operator. The services include: a voice over Internet protocol (VoIP) service, a data service and an Internet protocol television (IPTV) service. These services have to be preset in the ONU. The ONU is used in a project application in a plug and play manner. The service configuration method provided in this embodiment includes the following operations.

Firstly, an ONU system is initialized. The ONU reads a pre-configured service, extracts a service data, and constructs entity data according to various managed entities defined by ITU-T G.988, including:
1. T-CONT, two instances;
2. GEM Port CTP, three instances, two being bidirectional and used for voice service and data service, while the other one being downlink, unidirectional and used for an IPTV service;
3. an Internet protocol host configuration data (IP Host config data), one being an instance that acquires an address in a DHCP manner to use the address in a voice service;
4. an extended VLAN tagging operation configuration data, two instances, a downstream mode being 0, wherein an instance for voice includes an uplink rule RuleX (untag add Vid 30 Pbits 7), and an instance for data includes an uplink rule RuleY (untag add Vid 40 Pbits5);
5. VLAN tagging filter data, one instance for an IPTV service, wherein a VLAN list is Vid 200;
6. instances defined by other standards and related to the ONU system.

Secondly, the ONU accesses to the OLT system and completes authentication and authorization.

Thirdly, the OLT starts management information base audit (MIB audit) and management information base resynchronization (MIB resynchronization) processes according to the ITU-T G.988 definition.

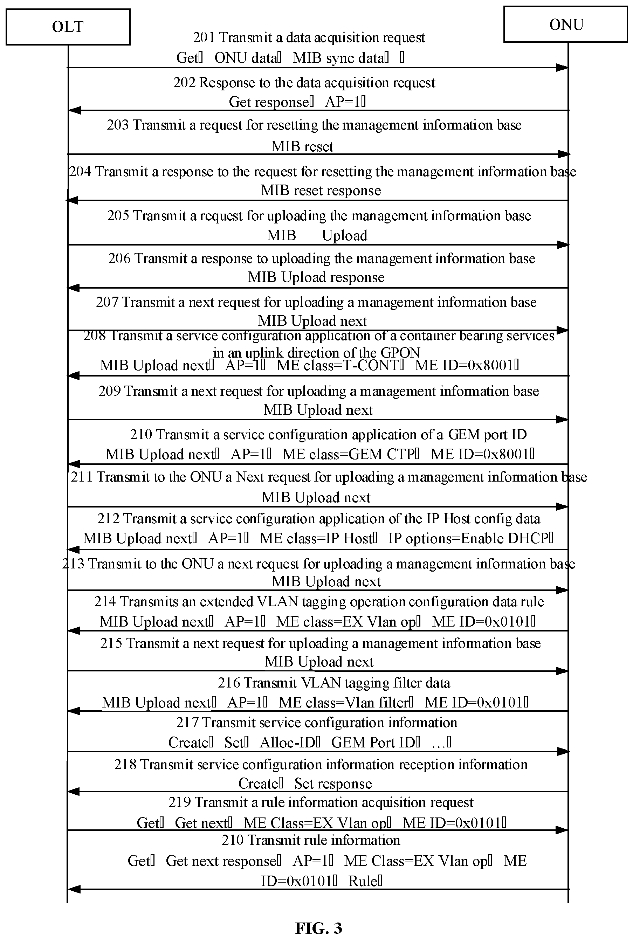

As shown in FIG. 3, the MIB audit and MIB resynchronization processes includes the following operations.

In operation 201, the OLT transmits a data acquisition request to the ONU. A particular transmitted content is: Get (ONU data (MIB sync data)).

In operation 202, the ONU transmits a response to the data acquisition request. In the response, the ONU requires to set a value of an AP field as 1 to notify the OLT that the ONU requires to apply for service configuration later. A particular transmitted content is: Get response (AP=1).

In response to the value of the AP field not being set in the response received by the OLT, operations 203 and 204 are performed. In response to the value of the AP field being set in the response received by the OLT, operation 205 and following operations are performed.

In operation 203, the OLT transmits a request for resetting the management information base to the ONU, i.e., MIB reset.

In operation 204, the ONU transmits a response to the request for resetting the management information base to the OLT, i.e., MIB reset response.

In an example, in response to the OLT receiving the MIB reset response by the ONU, the OLT decides whether to execute MIB reset according to the definition by ITU-T G.988. The ONU performs a corresponding operation.

Then a management information base synchronization process starts.

In operation 205, the OLT transmits a request for uploading the management information base to the ONU, i.e., MIB Upload.

In operation 206, the ONU transmits a response to uploading the management information base to the OLT, i.e., MIB Upload response.

Then a management information base synchronization process starts.

In operation 207, the OLT transmits to the ONU a next request for uploading a management information base, i.e., MIB Upload next.

In operation 208, the ONU transmits to the OLT a service configuration application of a container bearing services in an uplink direction of the GPON. That is, the ONU marks a T-CONT to be applied for in an MIB Upload next response message. A particular transmitted content is: MIB Upload next (AP=1, ME class=T-CONT, ME ID=0x8001).

In operation 209, the OLT transmits to the ONU a next request for uploading a management information base, i.e., MIB Upload next.

In operation 210, the ONU transmits to the OLT a service configuration application of a GEM port ID, i.e., a GEM port ID required for service. A particular transmitted content is: MIB Upload next (AP=1, ME class=GEM CTP, ME ID=0x8001).

In operation 211, the OLT transmits to the ONU a next request for uploading a management information base. A particular transmitted content is: MIB Upload next.

In operation 212, the ONU transmits to the OLT a service configuration application of the IP Host config data, i.e., IP Host config data in a dynamic host configuration protocol (DHCP) manner for the voice service. A particular transmitted content is: MIB Upload next (AP=1, ME class=IP Host, IP options=Enable DHCP).

In operation 213, the OLT transmits to the ONU a next request for uploading a management information base. A particular transmitted content is: MIB Upload next.

In operation 214, the ONU transmits to the OLT an extended VLAN tagging operation configuration data rule, i.e., an extended VLAN tagging operation configuration data rule required for service. A particular transmitted content is: MIB Upload next (AP=1, ME class=EX Vlan op, ME ID=0x0101).

In operation 215, the OLT transmits to the ONU a next request for uploading a management information base. A particular transmitted content is: MIB Upload next.

In operation 216, the ONU transmits to the OLT VLAN tagging filter data, i.e., a VLAN tagging filter data instance required for an IPTV service, and a VLAN list. A particular transmitted content is: MIB Upload next (AP=1, ME class=Vlan filter, ME ID=0x0101).

In operation 217, the OLT transmits to the ONU service configuration information. That is, according to a system resource condition, the OLT allocates Alloc-ID and GEM Port ID, and creates a full service configuration message according to a standard definition and transmits the full service configuration message to the ONU. A particular transmitted content is: Create, Set (Alloc-ID, GEM Port ID, ···).

In an example, the OLT configures VLAN information of a PON port of an OLT end and VLAN information of an Eth port of a WAN according to a service requirement.

In operation 218, the ONU transmits to the OLT service configuration information reception information. A particular transmitted content is: Create, Set response.

In an example, after receiving the service configuration information, the ONU completes configuration of a local service according to configuration of the OLT.

Then, after the MIB resynchronization process ends, the OLT acquires a rule table in an extended VLAN tagging operation to be applied for by the ONU item by item through a Get, Get next message defined by standard.

In operation 219, the OLT transmits to the ONU a rule information acquisition request. A particular transmitted content is: Get, Get next (ME Class=EX Vlan op, ME ID=0x0101).

In operation 220, the ONU transmits to the OLT rule information. A particular transmitted content is: Get, Get next response (AP=1, ME Class=EX Vlan op, ME ID=0x0101, Rule).

Another embodiment of the present application further provides a service configuration method. In order for the ONU to report the service application information to the OLT after the ONU accesses to the OLT, an ME particularly used for applying for service configuration is defined by extension following an existing standard frame. The standard frame is the ITU-T G.988 standard frame. The ME defined by extension is a service application for the ONU, including a managed entity ID and a service table.

An entity ME class is a service application for ONU. Because all service application of the entire ONU are to be represented, the entity is a single instance, and ME id=0. The instance includes a table attribute, storing information for describing ONU services.

Following the ITU-TG.988 standard frame, service description information of a service table is stored in a number of lines. One applicable implementation is that one piece of service configuration application information is displayed in one row (distinguished by Row id). Row id starts from 0, and has a length of 2 bytes as an only keyword for marking and distinguishing different rows.

Based on a limitation by the standard to a length of a data format, one row of information may be composed of a number of portions (Row part id). Row part id is denoted by seven bits of a third byte, having a value range of 0-127. An MSB of the byte denotes whether a current Row part is a last portion of a current row (distinguished by Row id). Bit=0 denotes that a current Row part content is not a last one. Bit=1 denotes the current Row part content is a last component of an entire row. "Row part contents" of Row parts are arranged in a front-to-back order starting from "Row part content" of Row part id=0, so as to form a complete piece of row information.

ONU service configuration application information is described. In this embodiment, recording and storage is performed with character strings coded with an ASCII code. One applicable description manner is to describe through a JavaScript object notation (JSON) format. It is assumed that a service to be implemented is shown as FIG. 2, and thus the JSON format may be described as:

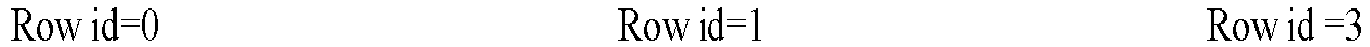

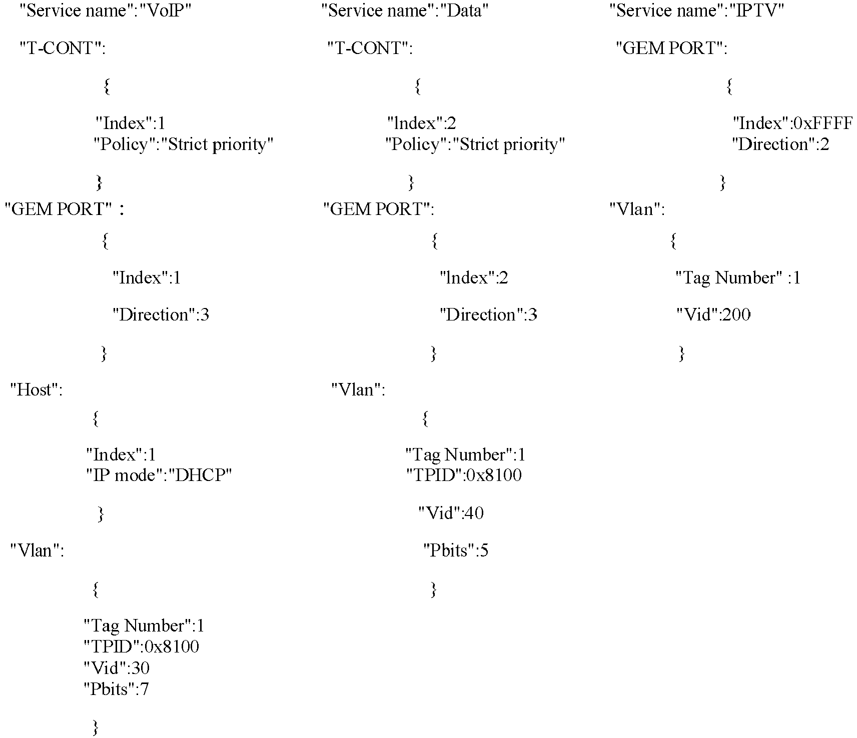

According to a service application for ONU managed entity defined in the above, the service configuration application information in FIG. 2 may be divided into 3 rows:
1. Row id=0 describes a voice service, and various resource information to be used shall be described with respective objects.
2. Row id=1 describes a data service, and respective objects describe detailed resource information.
3. Row id=2 describes an IPTV service; because the IPTV service is in a downlink direction, described objects do not include T-CONT resource information.

The service configuration method provided in this embodiment of the present application includes the following operations.

Firstly, an ONU system is initialized. The ONU reads a pre-configured service, extracts service data, describes service configuration application information in the JSON format, and constructs entity data according to entity definition of "service application for ONU" in this embodiment. The JSON data are divided into 3 rows that are segmented into row parts of corresponding lengths and stored in a service table.

Secondly, the ONU accesses to the OLT system and completes authentication and authorization.

Thirdly, the OLT starts a management information base audit process and a management information base resynchronization process according to the ITU-T G.988 definition.

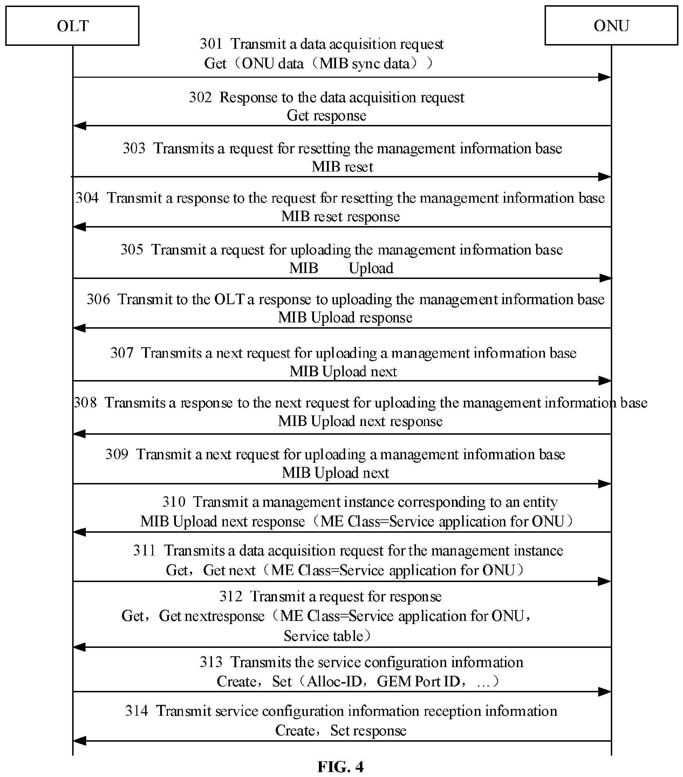

As shown in FIG. 4, the management information base audit process and the management information base resynchronization process includes the following operations.

In operation 301, the OLT transmits a data acquisition request to the ONU. A particular transmitted content is: Get (ONU data (MIB sync data)).

In operation 302, the ONU transmits a response to the data acquisition request. A particular transmitted content is: Get response.

In operation 303, the OLT transmits a request for resetting the management information base to the ONU, i.e., MIB reset.

In operation 304, the ONU transmits a response to the request for resetting the management information base to the OLT, i.e., MIB reset response.

In an example, in response to the OLT receiving the MIB reset response from the ONU, the OLT decides whether to execute MIB reset according to the definition by ITU-T G.988. The ONU performs a corresponding operation.

Then a management information base synchronization process starts.

In operation 305, the OLT transmits a request for uploading the management information base to the ONU, i.e., MIB Upload.

In operation 306, the ONU transmits to the OLT a response to uploading the management information base, i.e., MIB Upload response.

In operation 307, the OLT transmits to the ONU a next request for uploading a management information base, i.e., MIB Upload next.

In operation 308, the ONU transmits to the OLT a response to the next request for uploading the next management information base, i.e., MIB Upload next response.

Herein, the interaction process is completed.

In operation 309, the OLT transmits to the ONU a next request for uploading a management information base, i.e., MIB Upload next.

In 310, the ONU transmits to the OLT a management instance corresponding to an entity. A particular transmitted content is: MIB Upload next response (ME Class=Service application for ONU).

In operation 311, the OLT transmits to the ONU a data acquisition request for the management instance. That is, all data in a "service table" in a "service application for ONU" instance are acquired to the OLT through a get/get next message according to ITU-T G.988. A particular transmitted content is: Get, Get next (ME Class=Service application for ONU).

In operation 312, the ONU transmits to the OLT a request for response. A particular transmitted content is: Get, Get nextresponse (ME Class=Service application for ONU, Service table).

In operation 313, the OLT transmits to the ONU the service configuration information. That is, according to a system resource condition, the OLT allocates Alloc-ID and GEM Port ID, and creates a full service configuration message according to a standard definition and transmits the full service configuration message to the ONU. A particular transmitted content is: Create, Set (Alloc-ID, GEM Port ID, ···).

In an example, the OLT resolves the service configuration application information of the ONU, according to a "service application for ONU" definition.

In an example, the OLT configures VLAN information of a PON port of an OLT end and VLAN information of an Eth port of a WAN according to a service requirement.

In operation 314, the ONU transmits to the OLT service configuration information reception information. A particular transmitted content is: Create, Set response.

In an example, after receiving the service configuration information, the ONU completes configuration of a local service according to configuration of the OLT.

This embodiment of the present application further provides a service configuration method. In order for the ONU to report the service configuration application information to the OLT after the ONU accesses to the OLT, a managed entity particularly used for applying for service configuration is defined by extension following an existing standard frame. The standard frame is the IEEE 1904.1 standard frame. For an extended definition of an existing management attribute set "aOnuCapabilitiesExt", a service configuration application attribute "ServiceAppInfo" is added. A management attribute set with supplemented service configuration application attributes and service configuration application information corresponding to the service configuration application attributes are respectively shown as Table 2 and Table 3. Herein, "size" denotes sizes of service application data to be uploaded currently by the ONU, 0 denotes there being no service application data.

**Table 2**

| Size (octets) | Field (name) | Value | Notes |
|---|---|---|---|
| 1 | Branch | 0xC7 | Extended attributes branch |
| 2 | Leaf | 0x000C | Leaf identifier |
| 1 | Length | 0x05 | The size of TLV fields following theLength field |
| 1 | Ip6Supp ort | Varies | Value of sIp6Support sub-attribute, defined as follows: |
| | | | not_supported: 0x00 |
| | | | supported: 0x01 |
| 1 | TRxPow erControl | Varies | Value of sTRxPowerControl sub-attribute, defined as follows: |
| | | | not_supported: 0x00 |
| | | | supported_common: 0x01 |
| | | | supported_separate: 0x02 |
| 1 | EdpSup port | Varies | Value of sEdpSupport sub-attribute |
| 2 | Service AppInfo | Varies | This sub-attribute reflects the length of the ONU service application information. The value 0 indicate no service application need to upload to the OLT. |

**Table 3**

| Size (octets) | Field (name) | Value | Notes |
|---|---|---|---|
| 1 | Branch | 0xC7 | Extended attributes branch |
| 2 | Leaf | 0x00C2 | Leaf identifier |
| 1 | Length | Varies | The size of TLV fields following theLength field. |
| N | Detail | Varies | This sub-attribute contains the detail information of ONU service application in an ASCII format. |

In response to a service application information content of the ONU exceeding a maximum payload capacity of one OAM PDU, it is necessary to add a sequence for annotating a current response message before the type-length-value (TLV) according to the IEEE 1904.1 standard, i.e., to use Sequence TLV.

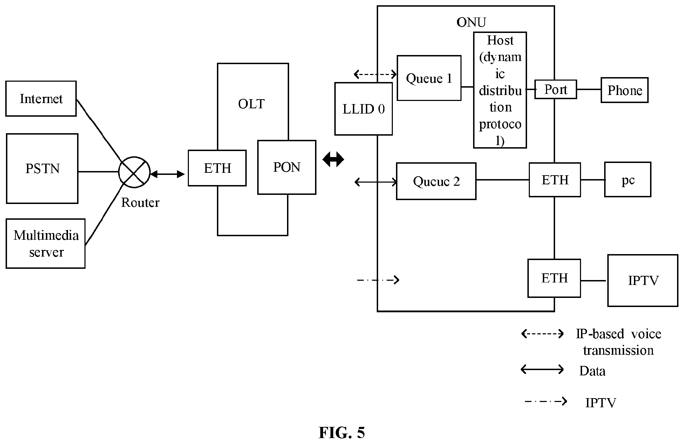

ONU service configuration application information is described. In this embodiment, recording and storage is performed with character strings coded with an ASCII code. One applicable description manner is to describe through the JSON format. It is assumed that a service to be implemented is shown as FIG. 5, and thus the JSON format may be described as:

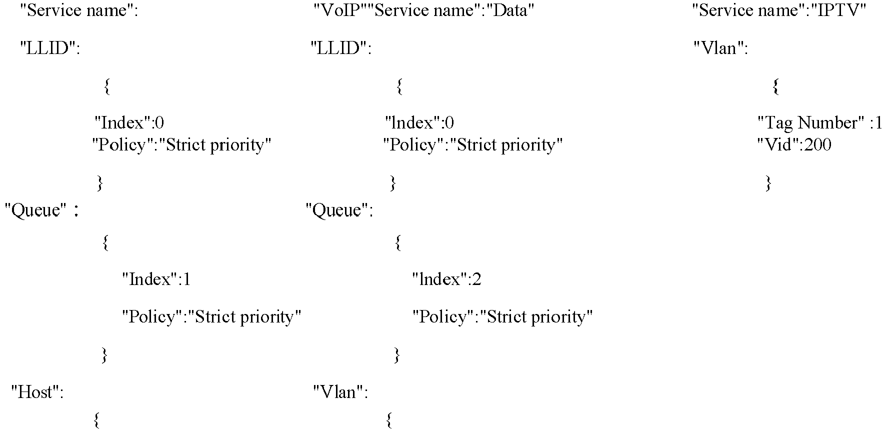

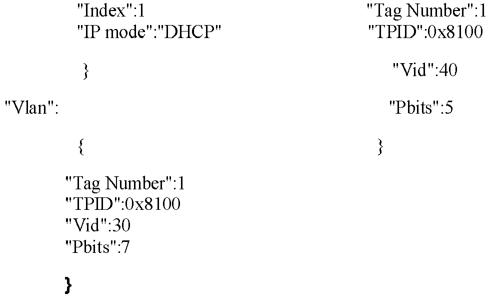

The service configuration method provided in this embodiment of the present application includes the following operations.

Firstly, an ONU system is initialized. The ONU reads a pre-configured service, extracts service data, describes service configuration application information in the JSON format, constructs data according to the "service application for ONU" extended attribute definition. The JSON data form character buffering coded with the ASCII code.

Secondly, the ONU accesses to the OLT system and completes authentication and authorization.

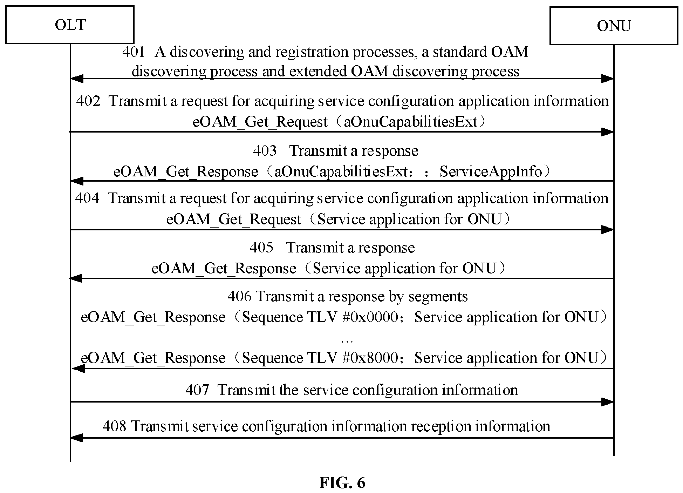

As shown in FIG. 6, the following operations are included.

In operation 401, the OLT and the ONU perform a discovering and registration processes, a standard OAM discovering process and extended OAM discovering process in sequence. That is, multi-point control protocol (MPCP) discovering and registration process, standard OAM discovering and extended OAM discovering processes are completed according to the IEEE 1904.1 standard.

In operation 402, the OLT transmits to the ONU a request for acquiring service configuration application information. That is, the OLT acquires an extended attribute aOnuCapabilitiesExt of the ONU through an eOAM_Get_Request message according to the IEEE 1904.1 standard. A particular transmitted content is: eOAM_Get_Request (aOnuCapabilitiesExt).

In response to the ONU requiring to apply for configuration information, a buffered size of characters of the service application information is reported in the attribute ServiceAppInfo, and operation 403 continues. In response to the ONU not requiring to apply for configuration information, a sub-attribute ServiceAppInfo is valued as 0, and operation S407 continues.

In operation 403, the ONU transmits to the OLT a response. A particular transmitted content is: eOAM_Get_Response (aOnuCapabilitiesExt : : ServiceAppInfo).

In operation 404, the OLT transmits to the ONU a request for acquiring service configuration application information. That is, the OLT acquires detailed information of the extended attribute Servic application for ONU through the eOAM_Get_Request message. A particular transmitted content is: eOAM_Get_Request (Service application for ONU).

If the buffered size of characters required for the service application by the ONU does not exceed a maximum payload of one OAM PDU, i.e., not exceeding 1490bytes, operation 404 is performed. Otherwise, operation 405 is performed.

In operation 405, the ONU transmits to the OLT a response. That is, an extended attribute service application for ONU is reported through an eOAM_Get_Response message, and carries service application information through a sub-attribute Detail. A particular transmitted content is: eOAM_Get_Response (Service application for ONU).

In operation 406, the ONU transmits to the OLT a response by segments, i.e., the extended attribute Service application for ONU is reported through multiple eOAM_Get_Response messages. A Sequence TLV is inserted before the tag length value (TLV). A sub-attribute of each Service application for ONU carries a segment of service application information. The Sequence TLV is used to mark the segment. A particular transmitted content is: eOAM_Get_Response (Sequence TLV #0x0000; Service application for ONU)···eOAM_Get_Response (Sequence TLV #0x8000; Service application for ONU).

In an example, the OLT resolves service application information of the ONU from the "Service application for ONU" information uploaded from the eOAM_Get_Response message.

Following the IEEE 1904.1 standard, the Sequence TLV shall follows the following principle:
1. The SequenceNumber field in a first OAM PDU is filled with 0, i.e., sequence numbers start from 0.
2. The LastResponse field in a last OAM PDU is set as binary 1, denoting that the current field is a last piece.
3. SequenceNumber fields in all OAM PDUs are set as ascending in sequence.

In operation 407, the OLT transmits to the ONU the service configuration information. That is, according to a system resource condition, the OLT allocates LLID and service VLAN.

In an example, the OLT configures VLAN information of a PON port of an OLT end and VLAN information of an Eth port of a WAN according to a service requirement.

In operation 408, the ONU transmits to the OLT service configuration information reception information.

In an example, after receiving the service configuration information, the ONU completes configuration of a local service according to configuration of the OLT.

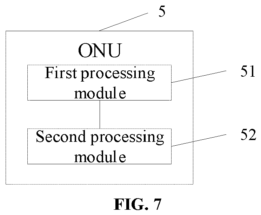

An embodiment of the present application further provides an ONU. As shown in FIG. 7, an ONU5 includes a first processing module 51 and a second processing module 52.

The first processing module 51 is configured to apply for service configuration information from an OLT according to pre-configured service information.

The second processing module 52 is configured to perform service configuration according to the service configuration information.

In an example, the first processing module 51 is configured to generate service configuration application information according to the pre-configured service information and using an information interaction protocol message defined by an extended field; and to transmit the service configuration application information to the OLT.

In an example, the first processing module 51 is further configured to generate service configuration application information according to the pre-configured service information and based on an ME defined based on existing standard framework extension; and to transmit the service configuration application information to the OLT.

In an example, when the ONU and the OLT are located in a GPON system, the information interaction protocol message is an OMCI message. The first processing module 51 is further configured to: (i) determine a parameter corresponding to a resource to be configured by the OLT to the ONU or to be self-configured by the OLT according to the pre-configured service information; (ii) create at least one OMCI instance including the acquired parameter; (iii) upload the acquired OMCI instance to the OMCI message, and set a value of an MSB among message-type fields in the OMCI message as a value for applying for service configuration of the OMCI message to be transmitted to the OLT, and as the service configuration application information, The MSB among the message-type fields in the OMCI message is pre-extended and defined as a bit indicating whether the OMCI message transmitted to the OLT is used to apply for the service configuration.

In an example, the first processing module 51 is further configured to: (i) receive a data asynchronous request from the OLT; (ii) set the value of the MSB among message-type fields in the OMCI message as the value for applying for service configuration of the OMCI message to be transmitted to the OLT; and (iii) transmit the processed OMCI message to the OLT to notify the OLT of there being subsequent application for the service configuration from the ONU.

In an example, the first processing module 51 is further configured to (i) generate a management instance corresponding to the ME according to the pre-configured service information; and (ii) take the management instance as the service configuration application information.

In an example, when the ONU and the OLT are located in the GPON system, the ME includes: an ME identifier and an ME attribute. The ME attribute includes at least one piece of service configuration application information and an identifier corresponding to the service configuration application information.

In an example, when the ONU and the OLT are located in an EPON system, the ME includes: a management attribute set with supplemented service configuration application attributes and information corresponding to the supplemented service configuration application attributes.

In an example, in response to characters of the information corresponding to the service configuration application attributes exceeding a maximum valid load of a single OAM PDU, the first processing module 51 is further configured to: (i) divide the information corresponding to the service configuration application attributes in the ME into information segments each having a character not exceeding the maximum valid load of the single OAM PDU; and (ii) transmit acquired information segments to the OLT in sequence.

In this embodiment, an ONU applies for service configuration information from an OLT according to pre-configured service information, and performs service configuration according to the service configuration information. Therefore, automatic configuration of service can be achieved. Complicity of service activation by an operator is decreased and service activation is more efficient.

In practice, both the first processing module 51 and the second processing module 52 may be located in a central processing unit (CPU), a micro processor unit (MPU), a digital signal processor (DSP), a field programmable gate array (FPGA) or the like.

The present application further provides a service configuration apparatus including a memory, a processor and a computer program stored in the memory and capable of running in the processor. When executing the program, the processor implements the service configuration method according to any one the above embodiments.

The present application further provides a computer-readable storage medium storing a computer-executable instruction for implementing the service configuration method according to any one the above embodiments.

Although implementations disclosed in the embodiments of the present application are as described above, the contents described are only implementations used to facilitate understanding of the embodiments of the present application, and are not intended to limit the embodiments of the present application. Any person skilled in the art of the embodiments of the present application, without departing from the scope disclosed in the embodiments of the present application, can make any modifications and changes in form and details of the implementation, but the scope of patent protection of the embodiments of the present application shall still be subject to the scope defined by the Claims.

## Claims

1. A service configuration method, comprising:
transmitting, by an optical network unit, ONU, service configuration application information to an optical line terminal, OLT, according to pre-configured service information to apply for service configuration information, wherein the service configuration application information comprises all service configurations required by all OLT-ONUs for implementing pre-configured service bearing and forwarding; and
performing (102), by the ONU, service configuration according to the service configuration information.

2. The service configuration method according to claim 1, wherein the ONU transmitting the service configuration application information to the OLT according to the pre-configured service information to apply for the service configuration information comprises:
generating, by the ONU, the service configuration application information according to the pre-configured service information and using an information interaction protocol message defined by an extended field; and
transmitting, by the ONU, the service configuration application information to the OLT.

3. The service configuration method according to claim 1, wherein the ONU transmitting the service configuration application information to the OLT according to the pre-configured service information to apply for the service configuration information comprises:
generating, by the ONU, the service configuration application information according to the pre-configured service information and based on a managed entity, ME, defined based on a standard framework extension; and
transmitting, by the ONU, the service configuration application information to the OLT.

4. The service configuration method according to claim 2, wherein in a case that the ONU and the OLT are located in a gigabit-capable passive optical network, GPON, system, the information interaction protocol message is an ONU management and control interface, OMCI, message, and the ONU generating the service configuration application information according to the pre-configured service information and using the information interaction protocol message defined by the extended field comprises:
determining, by the ONU, a parameter corresponding to a resource required to be configured by the OLT to the ONU or to be self-configured by the OLT, according to the pre-configured service information;
creating, by the ONU, at least one OMCI instance comprising the parameter; and
uploading, by the ONU, the at least one OMCI instance to the OMCI message, and setting a value of a most significant bit, MSB, among message-type fields in the OMCI message as a value for applying for service configuration of the OMCI message to be transmitted to the OLT, and as the service configuration application information; the MSB among the message-type fields in the OMCI message being pre-extended and defined as a bit indicating whether the OMCI message transmitted to the OLT is used to apply for the service configuration.

5. The service configuration method according to claim 4, wherein before the ONU uploading the OMCI instance to the OMCI message, the method further comprises:
receiving, by the ONU, a data acquisition request from the OLT;
setting, by the ONU, the value of the MSB among message-type fields in the OMCI message as the value for applying for service configuration of the OMCI message to be transmitted to the OLT; and
transmitting, by the ONU, the OMCI message to the OLT to notify the OLT of there being subsequent application for the service configuration from the ONU.

6. The service configuration method according to claim 3, wherein the ONU generating the service configuration application information according to the pre-configured service information and based on the ME defined based on a standard framework extension comprises:
generating, by the ONU, a management instance corresponding to the ME according to the pre-configured service information; and
taking, by the ONU, the management instance as the service configuration application information.

7. The service configuration method according to claim 6, wherein in a case that the ONU and the OLT are located in the GPON system, the ME comprises: an ME identifier and an ME attribute;
the ME attribute comprises:
at least one piece of service configuration application information, and
an identifier corresponding to the at least one piece of service configuration application information.

8. The service configuration method according to claim 6, wherein in a case that the ONU and the OLT are located in an Ethernet passive optical network, EPON, system, the ME comprises:
a management attribute set with supplemented service configuration application attributes; and
information corresponding to the supplemented service configuration application attributes.

9. The service configuration method according to claim 8, wherein in response to characters of the information corresponding to the supplemented service configuration application attributes exceeding a maximum valid load of a single operation administration and maintenance protocol data unit, OAM PDU), the ONU transmitting the service configuration application information to the OLT, comprising:
dividing, by the ONU, the information corresponding to the supplemented service configuration application attributes in the ME into information segments, each of the information segments having a character not exceeding the maximum valid load of the single OAM PDU; and
transmitting, by the ONU, the information segments to the OLT in sequence.

10. The service configuration method according to claim 1, wherein the pre-configured service information is information corresponding to all functions required during following operations in a system.

11. The service configuration method according to claim 1, wherein the service comprises at least one of a voice over Internet protocol service, a data service and an Internet protocol television service; and the service is preset in the ONU.

12. An optical network unit (5), comprising:
a first processing module (51), configured to transmit service configuration application information to an optical line terminal according to pre-configured service information to apply for service configuration information, wherein the service configuration application information comprises all service configurations required by all OLT-ONUs for implementing pre-configured service bearing and forwarding; and
a second processing module (52), configured to perform service configuration according to the service configuration information.

13. A service configuration apparatus, comprising a memory, a processor and a computer program stored in the memory and capable of running in the processor, wherein when executing the program, the processor implements the service configuration method according to any one of claims 1 to 11.

14. A computer-readable storage medium, storing a computer-executable instruction for implementing the service configuration method according to any one of claims 1 to 11.

## Patentansprüche

1. Verfahren zur Dienstkonfiguration mit den Schritten:
Übertragen von Dienstkonfigurationsanforderungsinformation durch eine optische Netzwerkeinheit (optical network unit, ONU) an ein optisches Leitungsendgerät (optical line terminal, OLT) gemäß vorkonfigurierter Dienstinformation, um Dienstkonfigurationsinformation anzufordern, wobei die Dienstkonfigurationsanforderungsinformation alle Dienstkonfigurationen umfasst, die von allen OLT-ONUs zum Implementieren von vor konfigurierter Diensthaltung und - weiterleitung benötigt werden; und
Durchführen (102) einer Dienstkonfiguration durch die ONU gemäß der Dienstkonfigurationsinformation.

2. Verfahren zur Dienstkonfiguration nach Anspruch 1, bei dem das Übertragen der
Dienstkonfigurationsanforderungsinformation durch die ONU an das OLT gemäß der vorkonfigurierten Dienstinformation, um Dienstkonfigurationsinformation anzufordern, umfasst:
Erzeugen der Dienstkonfigurationsanforderungsinformation durch die ONU gemäß der vorkonfigurierten Dienstinformation und unter Verwendung einer durch ein erweitertes Feld definierten Informationsinteraktionsprotokollnachricht; und
Übertragen der
Dienstkonfigurationsanforderungsinformationen durch die ONU an das OLT.

3. Verfahren zur Dienstkonfiguration nach Anspruch 1, bei dem das Übertragen der
Dienstkonfigurationsanforderungsinformation durch die ONU an das OLT gemäß der vorkonfigurierten Dienstinformation, um die Dienstkonfigurationsinformation anzufordern, umfasst:
Erzeugen der Dienstkonfigurationsanforderungsinformation durch die ONU gemäß der vorkonfigurierten Dienstinformation und basierend auf einer verwalteten Entität, ME, die basierend auf einer Standard-Framework-Erweiterung definiert ist; und
Übertragen der
Dienstkonfigurationsanforderungsinformation durch die ONU an das OLT.

4. Verfahren zur Dienstkonfiguration nach Anspruch 2, bei dem in einem Fall, in dem sich die ONU und das OLT in einem Gigabitfähigen passiven optischen Netzwerksystem (GPON) befinden, die Informationsinteraktionsprotokollnachricht eine ONU-Verwaltungs- und -Steuerungsschnittstellen- (ONU management and control interface, OMCI) -Nachricht ist, und das Erzeugen der Dienstkonfigurationsanforderungsinformation gemäß der vorkonfigurierten Dienstinformation und unter Verwendung der durch das erweiterte Feld definierten
Informationsinteraktionsprotokollnachricht durch die ONU umfasst:
Bestimmen, durch die ONU, eines Parameters, der einer Ressource entspricht, die von dem OLT für die ONU konfiguriert werden muss oder die von dem OLT selbst konfiguriert werden muss, gemäß der vorkonfigurierten Dienstinformation;
Erzeugen mindestens einer OMCI-Instanz, die den Parameter umfasst, durch die ONU; und
Hochladen der mindestens einen OMCI-Instanz in die OMCI-Nachricht durch die ONU und Einstellen eines Wertes eines höchstwertigen Bits, MSB, unter den Nachrichtentypfeldern in der OMCI-Nachricht als einen Wert zum Anfordern der Übertragung einer Dienstkonfiguration der OMCI-Nachricht an das OLT und als die
Dienstkonfigurationsanforderungsinformation; wobei das MSB unter den Nachrichtentypfeldern in der OMCI-Nachricht vorerweitert und als ein Bit definiert ist, das anzeigt, ob die an das OLT übertragene OMCI-Nachricht zum Anfordern der Dienstkonfiguration verwendet wird.

5. Verfahren zur Dienstkonfiguration nach Anspruch 4, wobei das Verfahren ferner vor dem Hochladen der OMCI-Instanz in die OMCI-Nachricht durch die ONU umfasst:
Empfangen einer Datenerfassungsanforderung von dem OLT durch die ONU;
Einstellen, durch die ONU, des Wertes des MSB unter den Nachrichtentypfeldern in der OMCI-Nachricht als den Wert zum Anfordern der Übertragung einer Dienstkonfiguration der OMCI-Nachricht an das OLT; und
Übertragen der OMCI-Nachricht an das OLT durch die ONU, um dem OLT mitzuteilen, dass eine nachfolgende Anforderung der Dienstkonfiguration von der ONU vorliegt.

6. Verfahren zur Dienstkonfiguration nach Anspruch 3, bei dem das Erzeugen der Dienstkonfigurationsanforderungsinformation durch die ONU gemäß der vorkonfigurierten Dienstinformationen und basierend auf der ME, die basierend auf einer Standard-Framework-Erweiterung definiert ist, umfasst:
Erzeugen einer der ME entsprechenden Managementinstanz durch die ONU gemäß der vorkonfigurierten Dienstinformation; und
Verwenden der Managementinstanz durch die ONU als die Dienstkonfigurationsanforderungsinformation.

7. Verfahren zur Dienstkonfiguration nach Anspruch 6, wobei in einem Fall, in dem sich die ONU und das OLT in dem GPON-System befinden, die ME einen ME-Identifikator und ein ME-Attribut umfasst;
das ME-Attribut
mindestens ein Datum Dienstkonfigurationsanforderungsinformation, und
einen Identifikator umfasst, der dem mindestens einen Datum Dienstkonfigurationsanforderungsinformationen entspricht.

8. Verfahren zur Dienstkonfiguration nach Anspruch 6, bei dem in einem Fall, in dem sich die ONU und das OLT in einem passiven optischen Ethernet-Netzwerk- (EPON) -System befinden, die ME
einen Management-Attribut-Satz mit ergänzten Dienstkonfigurations-Anforderungsattributen; und
Information, die den ergänzten Dienstkonfigurations-Anforderungsattributen entspricht, umfasst.

9. Verfahren zur Dienstkonfiguration nach Anspruch 8, bei dem als Reaktion darauf, dass Zeichen der Information, die den ergänzten Dienstkonfigurationsanforderungsattributen entspricht, eine maximal gültige Last einer einzelnen Betriebsverwaltungs- und Wartungsprotokolldateneinheit (operation administration and maintenance protocol data unit, OAM PDU) überschreiten, das Übertragen der Dienstkonfigurationsanforderungsinformation durch die ONU an das OLT umfasst:
Aufteilen der Information, die den ergänzten Dienstkonfigurations-Anforderungsattributen in der ME entspricht, durch die ONU in Informationssegmente, wobei jedes der Informationssegmente ein Zeichen hat, das die maximal gültige Last der einzelnen OAM PDU nicht überschreitet; und
sequenzielles Übertragen der Informationssegmente durch die ONU an das OLT.

10. Verfahren zur Dienstkonfiguration nach Anspruch 1, bei dem die vorkonfigurierte Dienstinformation Information ist, die allen Funktionen entspricht, die während nachfolgender Operationen in einem System erforderlich sind.

11. Verfahren zur Dienstkonfiguration nach Anspruch 1, bei dem der Dienst einen Voice-over-IP-Dienst, einen Datendienst und/oder einen Internet-Protokoll-Fernsehdienst umfasst, und der Dienst in der ONU voreingestellt ist.

12. Optische Netzwerkeinheit (5), umfassend:
ein erstes Verarbeitungsmodul (51), das konfiguriert ist, um Dienstkonfigurationsanforderungsinformationen an ein optisches Leitungsendgerät gemäß vorkonfigurierter Dienstinformationen zu übertragen, um Dienstkonfigurationsinformationen anzufordern, wobei die Dienstkonfigurationsanforderungsinformation alle Dienstkonfigurationen umfasst, die von allen OLT-ONUs zum Implementieren von vor konfigurierter Diensthaltung und -weiterleitung benötigt werden; und
ein zweites Verarbeitungsmodul (52), das konfiguriert ist, um eine Dienstkonfiguration gemäß der Dienstkonfigurationsinformation durchzuführen.

13. Vorrichtung zur Dienstkonfiguration, die einen Speicher, einen Prozessor und ein Computerprogramm umfasst, das in dem Speicher gespeichert ist und in dem Prozessor ausführbar ist, wobei der Prozessor beim Ausführen des Programms das Verfahren zur Dienstkonfiguration nach einem der Ansprüche 1 bis 11 implementiert.

14. Computerlesbares Speichermedium, das einen computerausführbaren Befehl zur Implementierung des Verfahrens zur Dienstkonfiguration nach einem der Ansprüche 1 bis 11 speichert.

## Revendications

1. Procédé de configuration de service, comprenant :
la transmission, par une unité de réseau optique, ONU, d'informations de demande de configuration de service à un terminal de ligne optique, OLT, selon des informations de service préconfigurées pour demander des informations de configuration de service, dans lequel les informations de demande de configuration de service comprennent toutes les configurations de service requises par tous et toutes les OLT-ONU pour mettre en œuvre un portage et un transfert de services préconfigurés ; et
la réalisation (102), par l'ONU, d'une configuration de service selon les informations de configuration de service.

2. Procédé de configuration de service selon la revendication 1, dans lequel la transmission par l'ONU des informations de demande de configuration de service à l'OLT selon les informations de service préconfigurées pour demander les informations de configuration de service comprend :
la génération, par l'ONU, des informations de demande de configuration de service selon les informations de service préconfigurées et l'utilisation d'un message de protocole d'interaction d'informations défini par un champ étendu ; et
la transmission, par l'ONU, des informations de demande de configuration de service à l'OLT.

3. Procédé de configuration de service selon la revendication 1, dans lequel la transmission par l'ONU des informations de demande de configuration de service à l'OLT selon les informations de service préconfigurées pour demander les informations de configuration de service comprend :
la génération, par l'ONU, des informations de demande de configuration de service selon les informations de service préconfigurées et sur la base d'une entité gérée, ME, définie sur la base d'une extension de cadre standard ; et
la transmission, par l'ONU, des informations de demande de configuration de service à l'OLT.

4. Procédé de configuration de service selon la revendication 2, dans lequel, dans le cas où l'ONU et l'OLT sont situés dans un système de réseau optique passif gigabit, GPON, le message de protocole d'interaction d'informations est un message d'interface de gestion et de contrôle d'ONU, OMCI, et l'ONU, qui génère les informations de demande de configuration de service selon les informations de service préconfigurées et qui utilise le message de protocole d'interaction d'informations défini par le champ étendu, comprend :
la détermination, par l'ONU, d'un paramètre correspondant à une ressource qu'il faut configurer par l'OLT pour l'ONU ou qu'il faut autoconfigurer par l'OLT, selon les informations de service préconfigurées ;
la création, par l'ONU, d'au moins une instance OMCI comprenant le paramètre ; et
le téléchargement, par l'ONU, de l'au moins une instance OMCI dans le message OMCI, et le réglage d'une valeur d'un bit de poids fort, MSB, parmi des champs de type message dans le message OMCI, comme valeur de demande d'une configuration de service du message OMCI à transmettre à l'OLT, et comme informations de demande de configuration de service ; le MSB parmi les champs de type message dans le message OMCI étant pré-étendu et défini comme un bit indiquant si le message OMCI transmis à l'OLT est utilisé pour demander la configuration de service.

5. Procédé de configuration de service selon la revendication 4, dans lequel, avant que l'ONU ne télécharge l'instance OMCI dans le message OMCI, le procédé comprend en outre :
la réception, par l'ONU, d'une requête d'acquisition de données de l'OLT ;
le réglage, par l'ONU, de la valeur du MSB parmi des champs de type message dans le message OMCI comme valeur de demande d'une configuration de service du message OMCI à transmettre à l'OLT ; et
la transmission, par l'ONU, du message OMCI à l'OLT pour informer l'OLT qu'il existe une demande ultérieure de l'ONU pour la configuration de service.

6. Procédé de configuration de service selon la revendication 3, dans lequel la génération par l'ONU des informations de demande de configuration de service selon les informations de service préconfigurées et en fonction de la ME définie sur la base d'une extension de cadre standard comprend :
la génération, par l'ONU, d'une instance de gestion correspondant à la ME selon les informations de service préconfigurées ; et
la prise, par l'ONU, de l'instance de gestion comme informations de demande de configuration de service.

7. Procédé de configuration de service selon la revendication 6, dans lequel, dans le cas où l'ONU et l'OLT sont situés dans le système GPON, la ME comprend : un identifiant ME et un attribut ME ;
l'attribut ME comprend :
au moins une information de demande de configuration de service, et
un identifiant correspondant à l'au moins une information de demande de configuration de service.

8. Procédé de configuration de service selon la revendication 6, dans lequel dans le cas où l'ONU et l'OLT sont situés dans un réseau optique passif Ethernet, EPON, système, la ME comprend :
un jeu d'attributs de gestion contenant des attributs de demande de configuration de service supplémentaires ; et
des informations correspondant aux attributs de demande de configuration de service supplémentaires.

9. Procédé de configuration de service selon la revendication 8, dans lequel, en réponse au dépassement, par des caractères des informations correspondant aux attributs de demande de configuration de service supplémentaires, d'une charge maximale acceptable d'une unité de données de protocole d'exploitation, d'administration et de maintenance, PDU CAM, unique, l'ONU transmet les informations de demande de configuration de service à l'OLT, comprenant :
la division, par l'ONU, des informations correspondant aux attributs de demande de configuration de service supplémentaires dans la ME en segments d'informations, chacun des segments d'informations ayant un caractère ne dépassant pas la charge maximale acceptable de la PDU OAM unique ; et
la transmission, par l'ONU, des segments d'informations à l'OLT en séquence.

10. Procédé de configuration de service selon la revendication 1, dans lequel les informations de service préconfigurées sont des informations correspondant à toutes les fonctions requises lors des opérations suivantes dans un système.

11. Procédé de configuration de service selon la revendication 1, dans lequel le service comprend au moins un parmi un service de voix sur IP, un service de données et un service de télévision sur IP ; et le service est préréglé dans l'ONU.

12. Unité de réseau optique (5), comprenant :
un premier module de traitement (51) configuré pour transmettre des informations de demande de configuration de service à un terminal de ligne optique selon des informations de service préconfigurées pour demander des informations de configuration de service, dans lequel les informations de demande de configuration de service comprennent toutes les configurations de service requises par tous et toutes les OLT-ONU pour mettre en oeuvre un portage et un transfert de services préconfigurés ; et
un deuxième module de traitement (52) configuré pour réaliser une configuration de service selon les informations de configuration de service.

13. Appareil de configuration de service, comprenant une mémoire, un processeur et un programme informatique stocké dans la mémoire et pouvant être exécuté dans le processeur, dans lequel lors de l'exécution du programme, le processeur met en oeuvre le procédé de configuration de service selon l'une quelconque des revendications 1 à 11.

14. Support de stockage lisible par ordinateur, stockant une instruction exécutable par ordinateur pour mettre en oeuvre le procédé de configuration de service selon l'une quelconque des revendications 1 à 11.
